(19) **Europäisches Patentamt**
**European Patent Office**
**Office européen des brevets**

(11) **EP 3 626 947 A1**

(12) **EUROPEAN PATENT APPLICATION**

(43) Date of publication:
**25.03.2020 Bulletin 2020/13**

(21) Application number: **19199378.1**

(22) Date of filing: **24.09.2019**

(51) Int Cl.:
*F02C 9/28* (2006.01)          *F01D 21/00* (2006.01)
*G01D 5/347* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2018 US 201816139876**

(71) Applicant: **Pratt & Whitney Canada Corp.
Longueuil, Québec J4G 1A1 (CA)**

(72) Inventors:
• **CONCIATORI, Michael**
**Longueuil, Québec J4G 1A1 (CA)**
• **MEUNIER, Gabriel**
**Longueuil, Québec J4G 1A1 (CA)**

(74) Representative: **Dehns**
**St. Bride's House**
**10 Salisbury Square**
**London EC4Y 8JD (GB)**

(54) **SYSTEM AND METHODS OF DETERMINING ACCELERATION OF A SHAFT**

(57)    A system for determining an acceleration of an engine (10) comprises a processor (1402) and a memory (1404) comprising instructions (1406) stored thereon which when executed by the processor (1402) cause the system to perform a method of determining an acceleration of an engine (10). The method comprises obtaining and storing zero-crossing timestamps (302) in a buffer (304), determining angular displacement times of the shaft (20) based on the timestamps (302), applying a conversion factor ($K_\theta$) to the angular displacement times, determining an acceleration of a shaft (20) based on the angular displacement, and causing a fuel flow to the engine (10) to be adjusted as a function of the acceleration as determined. The zero-crossing timestamps (302) correspond to an angular displacement of a shaft (20) associated with the engine (10). The zero-crossing timestamps (302) are obtained using an angular displacement measurement device. The conversion factor ($K_\theta$) corresponds to an angular displacement of the shaft (20).

200

```
┌─────────────────────────────────────────────┐
│   Store zero-crossing timestamps in buffer   │
│                     210                      │
└─────────────────────────────────────────────┘
                       │
                       ▼
┌─────────────────────────────────────────────┐
│           Determine revolution times          │
│                     220                      │
└─────────────────────────────────────────────┘
                       │
                       ▼
┌─────────────────────────────────────────────┐
│ Apply angular displacement conversion factor │
│            to revolution times               │
│                     230                      │
└─────────────────────────────────────────────┘
                       │
                       ▼
┌─────────────────────────────────────────────┐
│            Determine acceleration            │
│                     240                      │
└─────────────────────────────────────────────┘
```

**FIG. 2**

**EP 3 626 947 A1**

## Description

## TECHNICAL FIELD

The present disclosure generally relates to the field of mechanical systems, and in particular to system and methods of determining an acceleration of a rotating shaft.

## BACKGROUND OF THE ART

One methodology to calculate an acceleration of a shaft, for example of a turbine engine, using a frequency sensor is to first calculate the shaft speed based on full revolutions of the shaft during a predetermined period of time. This method is not well suited for low frequency sensors as it can produce an acceleration that is equal to zero at low shaft speed if a full revolution of the shaft has not occurred.

## SUMMARY

In accordance with an aspect of the present invention, there is provided a system for determining an acceleration of an engine. The system comprises a processor, and a non-transitory computer-readable medium having stored thereon program instructions executable by the processor. The processor is configured to obtain and store zero-crossing timestamps in a buffer, determine angular displacement times of the shaft based on the timestamps, apply a conversion factor to the angular displacement times, determine an acceleration of the shaft based on the angular displacement, and optionally cause a fuel flow to the engine to be adjusted as a function of the acceleration as determined. The zero-crossing timestamps correspond to an angular displacement of a shaft associated with the engine. The zero-crossing timestamps are obtained using an angular displacement measurement device. The conversion factor corresponds to the angular displacement of the shaft. This aspect may extend to a system for adjusting a fuel flow to an engine, based on the determined acceleration.

In an embodiment according to the previous embodiment:

applying the conversion factor comprises converting the angular displacement times into speed values; and

determining the acceleration comprises determining a change in speed between a previous angular displacement and a current angular displacement.

In an embodiment according to any of the previous embodiments:

determining angular displacement times of the shaft comprises:

determining a time of a current angular displacement of the shaft, the time of the current angular displacement comprising a current timestamp value less a first previous full angular displacement timestamp value; and

determining a time of a previous angular displacement of the shaft, the time of the previous angular displacement comprising the first previous full angular displacement timestamp value less a second previous full angular displacement timestamp value; and

the change in speed between the previous angular displacement and the current angular displacement comprises the speed of the previous angular displacement less the speed of the current angular displacement.

In an embodiment according to any of the previous embodiments, the acceleration comprises a ratio between: the change in speed between the previous angular displacement and the current angular displacement; and an average angular displacement time of two previous angular displacements.

In an embodiment according to any of the previous embodiments, the acceleration comprises a ratio between: the change in speed between the previous angular displacement and the current angular displacement; and a time of the current angular displacement.

In an embodiment according to any of the previous embodiments, the program instructions are further executable for determining if at least one new zero-crossing has taken place; and wherein an angular displacement time of the shaft comprises a current timestamp value less a previous full angular displacement timestamp value.

In an embodiment according to any of the previous embodiments, the change in speed between the previous angular displacement and the current angular displacement comprises a speed of a current angular displacement last pass less the speed of the current angular displacement.

In an embodiment according to any of the previous embodiments, the acceleration comprises a ratio between: the change in speed; and a difference between a latest timestamp value a last pass timestamp value.

In an embodiment according to any of the previous embodiments, the acceleration comprises a ratio between: the change in speed; and a difference between an actual and lass pass value of an average angular displacement time.

In an embodiment according to any of the previous embodiments, the program instructions are further executable for:

subtracting a smallest timestamp from a buffer vector; and

determining a least squares approximation of a second order polynomial with n timestamps to receive a vector of coefficients, the second order polynomial defined by $\theta(t) = at^2 + bt + c$; and

wherein the acceleration of the shaft at the latest timestamp is determined based on a coefficient of the vector of coefficients, the acceleration of the shaft at the latest timestamp comprising 2*a.

In accordance with another aspect of the present invention, there is provided a computer-implemented method of determining an acceleration of an engine and/or adjusting a fuel flow to an engine. The method comprises obtaining and storing zero-crossing timestamps in a buffer, determining angular displacement times of the shaft based on the timestamps, applying a conversion factor to the angular displacement times, determining an acceleration of the shaft based on the angular displacement, and causing a fuel flow to the engine to be adjusted as a function of the acceleration as determined. The zero-crossing timestamps correspond to an angular displacement of a shaft associated with the engine. The zero-crossing timestamps are obtained using an angular displacement measurement device. The conversion factor corresponds to an angular displacement of the shaft.

In an embodiment according to any of the previous embodiments:

applying the conversion factor comprises converting the angular displacement times into speed values; and

determining the acceleration comprises determining a change in speed between a previous angular displacement and a current angular displacement.

In an embodiment according to any of the previous embodiments:

determining angular displacement times of the shaft comprises:

determining, by the processor, a time of a current angular displacement of the shaft, the time of the current angular displacement comprising a current timestamp value less a first previous full angular displacement timestamp value; and

determining, by the processor, a time of a previous angular displacement of the shaft, the time of the previous angular displacement comprising the first previous full angular displacement timestamp value less a second previous full angular displacement timestamp value; and

the change in speed between the previous angular displacement and the current angular displacement comprises the speed of the previous angular displacement less the speed of the current angular displacement.

In an embodiment according to any of the previous embodiments, the acceleration comprises a ratio between: the change in speed between the previous angular displacement and the current angular displacement; and an average angular displacement time of two previous angular displacements.

In an embodiment according to any of the previous embodiments, the acceleration comprises a ratio between: the change in speed between the previous angular displacement and the current angular displacement; and a time of the current angular displacement.

In an embodiment according to any of the previous embodiments, the method further comprises:

determining, by the processor, if at least one new zero-crossing has taken place; and

wherein an angular displacement time of the shaft comprises a current timestamp value less a previous full angular displacement timestamp value.

In an embodiment according to any of the previous embodiments, the change in speed between the previous angular displacement and the current angular displacement comprises a speed of a current angular displacement last pass less the speed of the current angular displacement.

In an embodiment according to any of the previous embodiments, the acceleration comprises a ratio between: the change in speed; and a difference between a latest timestamp and a last pass timestamp.

In an embodiment according to any of the previous embodiments, the acceleration comprises a ratio between: the change in speed; and a difference between an actual and lass pass value of an average angular displacement time.

In an embodiment according to any of the previous embodiments, the method further comprises:

subtracting, by the processor, a smallest timestamp from a buffer vector;

determining, by the processor, a least squares approximation of a second order polynomial with n timestamps to receive a vector of coefficients, the second order polynomial defined by $\theta(t) = at^2 + bt + c$; and

wherein the acceleration of the shaft at the latest timestamp is determined based on a coefficient of the vector of coefficients, the acceleration of the shaft at the latest timestamp comprising 2*a.

In accordance with another aspect of the present invention there is provided a non-transitory computer-readable storage medium having instructions thereon which when executed by a processor perform a method of determining an acceleration of an engine. The method comprises obtaining and storing zero-crossing timestamps in a buffer, determining angular displacement times of the shaft based on the timestamps, applying a conversion factor to the angular displacement times, determining an acceleration of the shaft based on the angular displacement, and causing a fuel flow to the engine to be adjusted as a function of the acceleration as determined. The zero-crossing timestamps correspond to an angular displacement of a shaft associated with the engine. The zero-crossing timestamps are obtained using an angular displacement measurement device. The conversion factor corresponds to an angular displacement of the shaft.

In various further aspects, the disclosure provides corresponding systems and devices, and logic structures such as machine-executable coded instruction sets for implementing such systems, devices, and methods.

In this respect, before explaining at least one embodiment in detail, it is to be understood that the embodiments are not limited in application to the details of construction and to the arrangements of the components set forth in the following description or illustrated in the drawings. Also, it is to be understood that the phraseology and terminology employed herein are for the purpose of description and should not be regarded as limiting.

Any of the above features may be used together, in any combination. Many further features and combinations thereof concerning embodiments described herein will appear to those skilled in the art following a reading of the instant disclosure.

## DESCRIPTION OF THE FIGURES

Reference is now made to the accompanying figures in which:

Fig. 1A illustrates a schematic cross-sectional view of a gas turbine engine, in accordance with some embodiments;

Fig. 1B illustrates a phonic wheel assembly, in accordance with some embodiments;

Fig. 2 illustrates, in a flowchart, an example of a method of determining an acceleration of an engine, in accordance with some embodiments;

Fig. 3 illustrates, in a schematic diagram, an example of a method of approximating an acceleration of a shaft associated with an engine, in accordance with some embodiments;

Fig. 4 illustrates, in a flowchart, another example of a method of determining an acceleration of an engine, in accordance with some embodiments;

Fig. 5 illustrates, in a schematic diagram, another example of a method of approximating an acceleration of a shaft associated with an engine, in accordance with some embodiments;

Fig. 6 illustrates, in a flowchart, another example of a method of determining an acceleration of an engine, in accordance with some embodiments;

Fig. 7 illustrates, in a schematic diagram, another example of a method of approximating an acceleration of a shaft associated with an engine, in accordance with some embodiments;

Fig. 8 illustrates, in a flowchart, another example of a method of determining an acceleration of an engine, in accordance with some embodiments;

Fig. 9 illustrates, in a schematic diagram, another example of a method of approximating an acceleration of a shaft associated with an engine, in accordance with some embodiments;

Fig. 10 illustrates, in a flowchart, another example of a method of determining an acceleration of an engine, in accordance with some embodiments;

Fig. 11 illustrates, in a schematic diagram, another example of a method of approximating an acceleration of a shaft associated with an engine, in accordance with some embodiments;

Fig. 12 illustrates, in a flowchart, another example of a method of determining an acceleration of an engine, in accordance with some embodiments;

Fig. 13 illustrates, in a schematic diagram, an example of a controller for an engine, in accordance with some embodiments; and

Fig. 14 illustrates a block diagram of a computing device, exemplary of an embodiment.

It is understood that throughout the description and figures, like features are identified by like reference numerals.

## DETAILED DESCRIPTION

There are described herein methods and systems for determining an acceleration of a shaft, for example such as shafts associated with a gas turbine engine. The methods and systems may be implemented for any rotating shaft. The methods and systems determine an acceleration of a shaft using timestamps associated with angular displacements of the shaft. In some embodiments, the shaft is associated with an engine.

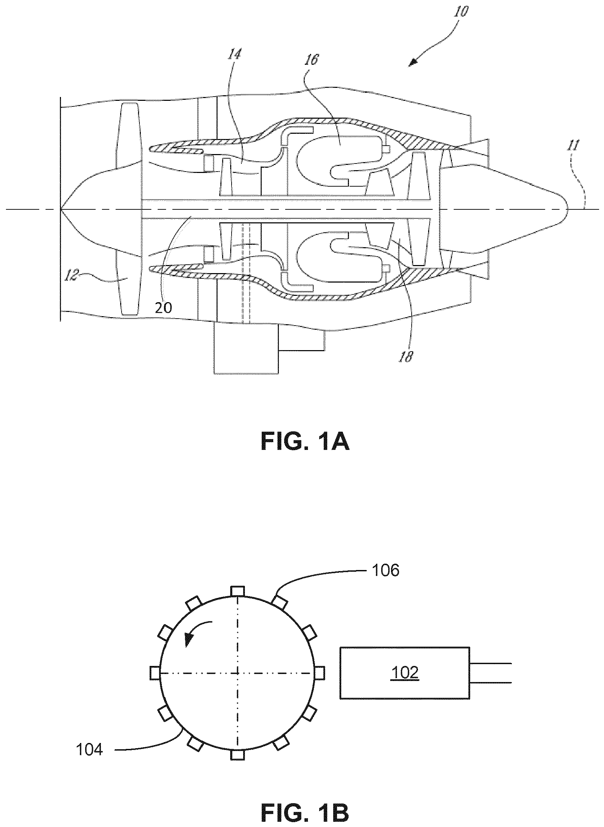

Figure 1A illustrates a schematic cross-sectional view of a gas turbine engine 10 of a type that may be provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A shaft 20 is provided between the turbine 18, and the fan 12. Note that while the turbine engine 10 illustrated in figure 1A is a turbofan engine, the methods and systems described herein may also be applicable to turboprop engines and turboshaft engines. In addition, the teachings herein are not limited to turbine engines as any rotating loaded shaft provided between a source (such as a turbine) and a load (such as a fan or other propulsor) may be detected using the methods and systems described herein.

An angular displacement measurement device may be used to obtain zero-crossing timestamps of an angular displacement of a shaft. In some embodiments, a contact-less device is used to detect angular displacements of the shaft, for example a phonic wheel assembly, as illustrated in figure 1B. In some embodiments, a phonic wheel 104 having a plurality of teeth (or markings) 106 distributed around an outer surface thereof are detected by a sensor 102 when a tooth or marking passes by the sensor 102. A sensor 102 is positioned relative to the phonic wheel 104. The rotating shaft 20 propels the phonic wheel 104. The sensor 102 may obtain readings when a tooth/marking passes by the sensor 102. The reading may include a timestamp of the crossing. The sensor 102 may be a proximity sensor, an optical sensor, an inductive sensor, or any other type of sensor known to those skilled in the art. It should be understood that in other embodiments, the wheel assembly may be contact-based, where the phonic wheel 104, having a plurality of teeth 106 distributed around an outer surface thereof, may be placed in contact with the rotating shaft 20.

During operation of an engine, an engine control software may call for periodic (e.g., every 20 milliseconds) engine sensors readings, performance of various calculations, and updating of outputs such as fuel metering devices. If acceleration of the shaft is to be determined based on the number of revolutions of the shaft within that 20 milliseconds, and the shaft has not rotated enough to be measured by the sensor 102, then the determination of the acceleration would be incorrect. A method of determining acceleration of the shaft based on angular displacement, rather than number of rotations/revolutions over a fixed time period, would provide a more accurate result.

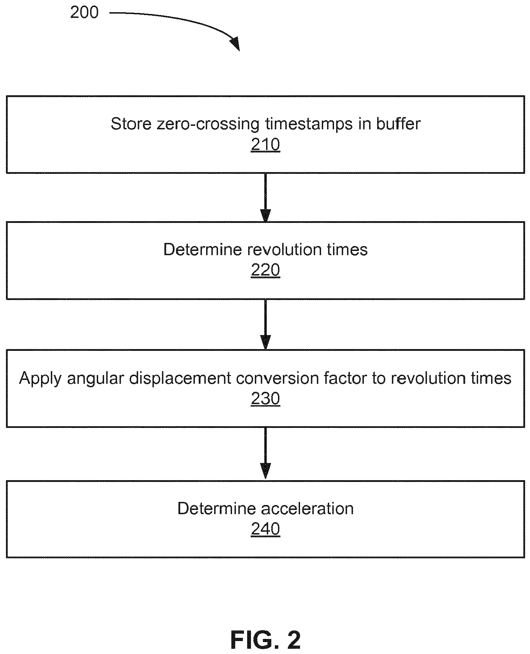

Figure 2 illustrates, in a flowchart, an example of a method 200 of determining an acceleration of a shaft, in accordance with some embodiments. The method 200 is capable of determining an acceleration of a shaft even if the maximum timestamp frequency (e.g., the time between each call of an engine control software) of the speed sensor is low. The method 200 comprises storing 210 zero-crossing timestamps in a buffer, determining 220 revolution times of the shaft based on the timestamps, applying 230 a conversion factor to the revolution times, and determining 240 an acceleration of the shaft based on the angular displacement. The step of determining 240 an acceleration of the shaft may comprise determining angular displacement times of the shaft based on the timestamps, and applying a conversion factor to the angular displacement times. The zero-crossing timestamps correspond to an angular displacement of a shaft associated with the engine. The angular displacement may comprise a full rotation/revolution, a partial rotation/revolution or multiple rotations/revolutions of the shaft. The conversion factor corresponds to an angular displacement of the shaft. Thus, the acceleration may be determined real-time based on per angular displacement data.

In some embodiments, the step of determining 220 revolution times of the shaft comprises determining the time of a current angular displacement of the shaft, and determining the time of a previous angular displacement of the shaft.

In some embodiments, applying 230 the conversion factor comprises converting the angular displacement times into speed values.

In some embodiments, determining 240 the acceleration comprises determining a change in speed between a previous angular displacement and a current angular displacement, and determining a current acceleration of the shaft based on the angular speed and the time of the angular displacement. Since the zero-crossing timestamps correspond to an angular displacement of a shaft, and the conversion factor corresponds to an angular displacement of the shaft, the acceleration may be determined real-time based on per angular displacement data.

In the context of engine control, shaft acceleration may be used for determining the acceleration of an engine associated with the shaft. Reducing the noise and lag associated with a shaft acceleration signal can lead to an improved acceleration/deceleration determination. In some embodiments, the method 200 may further include causing a fuel flow to the engine to be adjusted as a function of the acceleration as determined.

The example shown in figure 2 will be further described below. Five options will be described for the determination of the acceleration of a rotating shaft.

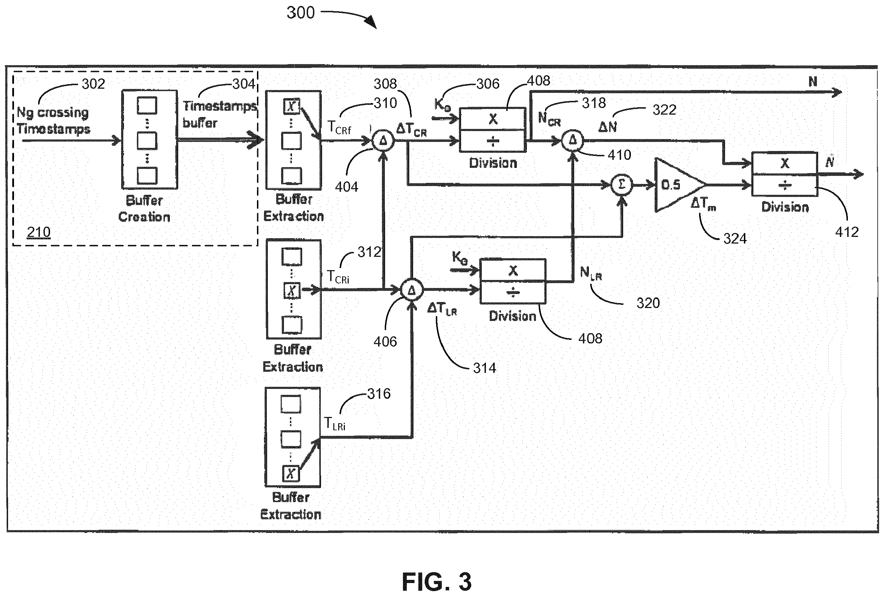

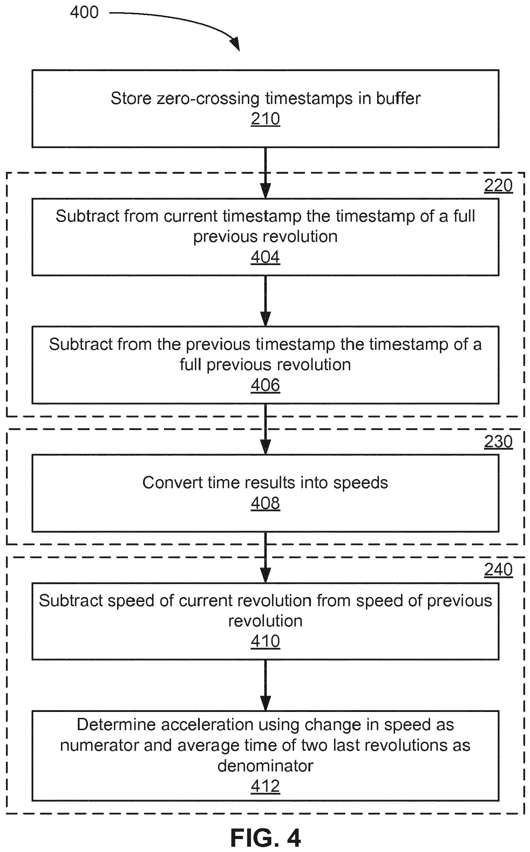

Figures 3, 5, 7, 9 and 11 illustrate, in schematic diagrams five methods for approximating an acceleration of a shaft, in accordance with some embodiments. Figures 4, 6, 8, 10 and 12 illustrate, in flowcharts, five corresponding methods for determining an acceleration of an engine, in accordance with some embodiments. Each method begins with the timestamps 302 being stored 210 in a buffer 304. The buffer readings can comprise either absolute times or relative times between timestamps. In the diagrams shown, the buffers 304 hold absolute times with from newest to oldest starting from top to bottom. Also, in each method, there is a conversion factor ($K_\theta$) 306 that corresponds to the angular displacement of a given unit of angular speed. The accelerations and speeds that can be determined using the methods described herein can be applied to tracking an engine acceleration.

In some embodiments, the methods of determining acceleration described herein may be followed by causing a fuel flow to the engine to be adjusted as a function of the acceleration as determined.

Figure 3 illustrates, in a schematic diagram, an example of a method 300 of approximating an acceleration of a shaft associated with an engine, in accordance with some embodiments. Figure 4 illustrates, in a flowchart, a corresponding method 400 of determining acceleration of an engine. After the storage 210 of the timestamps in the buffer 304, the method 400 determines 404 the time of the current revolution 308 by subtracting from latest timestamp 310 value, the timestamp value corresponding to a full revolution earlier 312. Similarly, the time of the previous revolution 314 is determined 406 by subtracting from the timestamp value corresponding to a full revolution earlier 312, the timestamp value corresponding to two full revolutions earlier 316. I.e., the time of a revolution comprises the timestamp value of that current revolution less the timestamp value of a previous full revolution. Once converted 408, the speed of the current revolution 318 is subtracted 410 from the speed of the last revolution 320 to produce (determine) the change in speed from the previous revolution to the current revolution 322. I.e., the speed comprises the speed of the last revolution 320 less the speed of the current revolution 318. To determine the acceleration 412, that value is used as the numerator and the average time of the two last revolutions 324 is used as the denominator. I.e., the acceleration comprises a ratio between the change in speed between the previous revolution and the current revolution, and the average time of the last two revolutions.

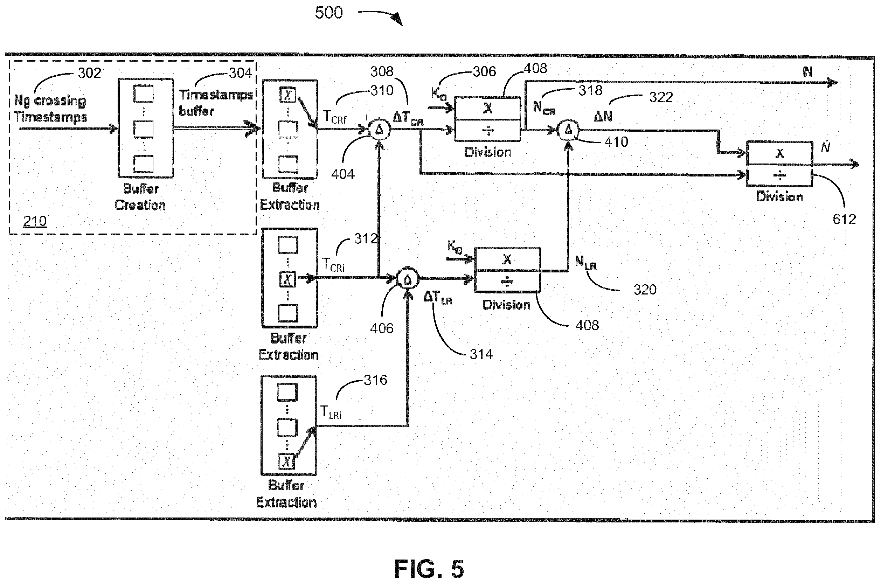

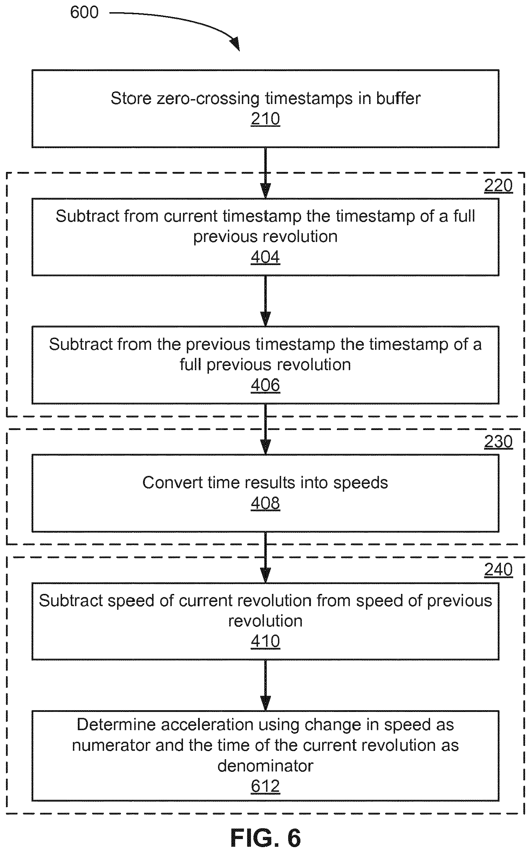

Figure 5 illustrates, in a schematic diagram, another example of a method 500 of approximating an acceleration of a shaft, in accordance with some embodiments. Figure 6 illustrates, in a flowchart, the corresponding method 600 of determining an acceleration of an engine. The method 600 is similar to the method 400. In the method 600, the time of the current revolution 308 is used as the denominator to determine 612 the acceleration. I.e., the acceleration comprises a ratio between the change in speed between the previous revolution and the current revolution, and the time of the current revolution. This method 600 estimates the acceleration with a slight lead compared to the previous method 400. This can be desirable in some situations, such as to allow the system to react to changes in acceleration more quickly.

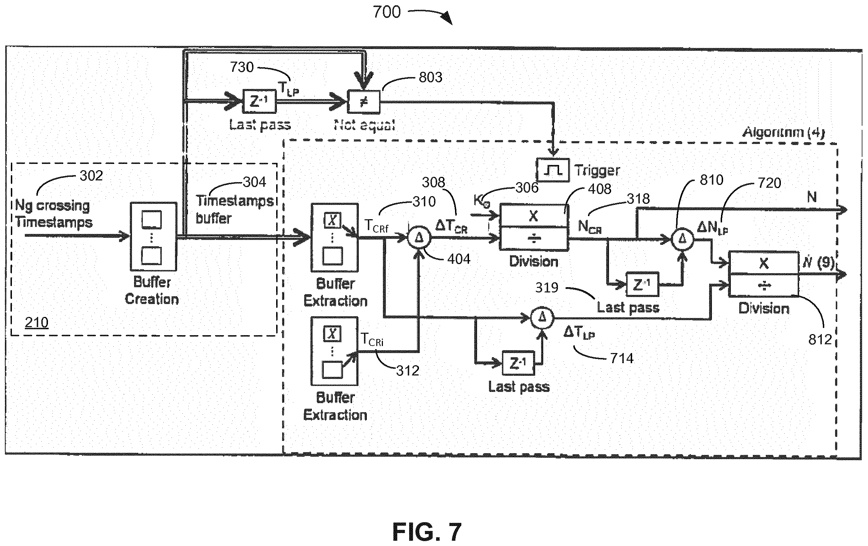

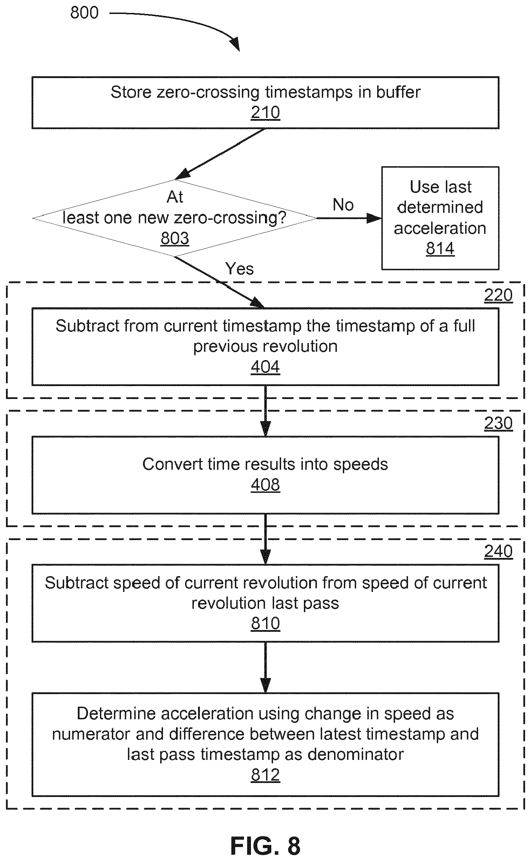

Figure 7 illustrates, in a schematic diagram, another example of a method 700 of approximating an acceleration of a shaft, in accordance with some embodiments. Figure 8 illustrates, in a flowchart, the corresponding method 800 of determining an acceleration of an engine. In the method 800, the acceleration is determined when there has been at least one new zero-crossing 803 since the last determination. In other words if buffer 304 is not equal 803 to the buffer calculated last pass 730 then algorithm (4) is executed. If there have not been any new zero-crossings 803, the last determined acceleration is held 814. This is done to prevent the calculated acceleration from constantly toggling between a new calculated value and zero. In this method 800, the time of the current revolution 306 is determined 404 by subtracting from latest timestamp 310 value, the timestamp value corresponding to a full revolution earlier 312. I.e., the time of the current revolution comprises the latest timestamp value less the previous full revolution timestamp value. Once converted 408, the speed of the current revolution 318 is subtracted 810 from the speed of the current revolution last pass 319 to produce the change in speed from the last pass revolution to the current revolution 720. I.e., the change in speed from the last pass revolution to the current revolution comprises the speed of the current revolution last pass less the speed of the current revolution. To determine 812 the acceleration, that value 720 is used as the numerator and the difference from latest timestamp and last pass latest timestamp 714 is used as the denominator. I.e., the acceleration comprises a ratio between the change in speed from the last pass revolution to the current revolution, and the difference from the latest timestamp and the last pass latest timestamp.

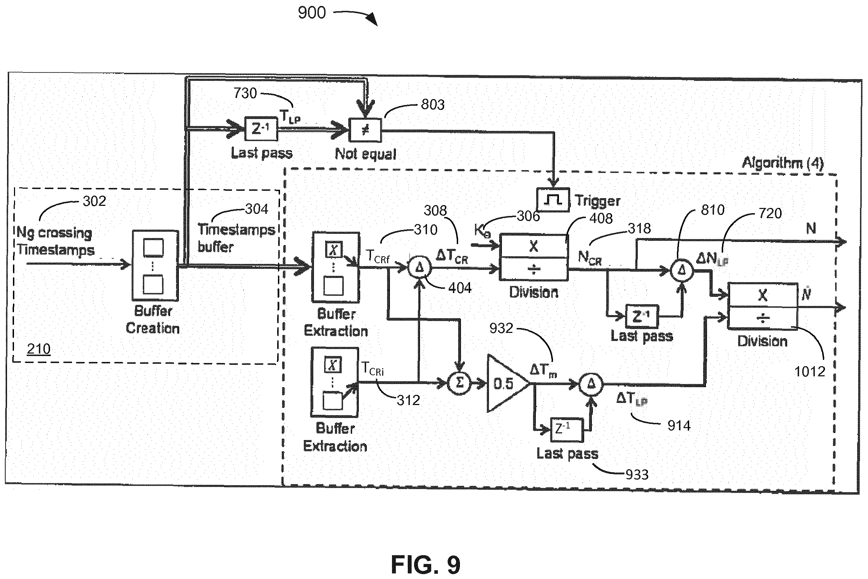

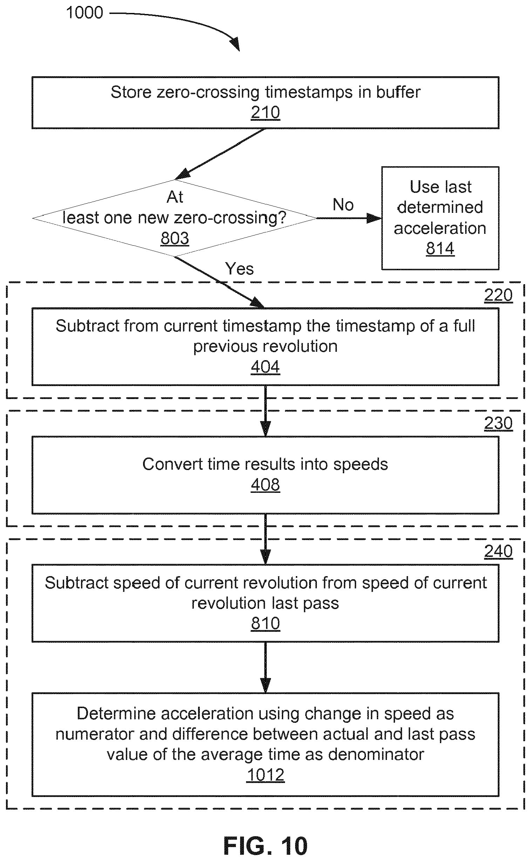

Figure 9 illustrates, in a schematic diagram, another example of a method 900 of approximating an acceleration of a shaft, in accordance with some embodiments. Figure 10 illustrates, in a flowchart, the corresponding method 1000 of determining an acceleration of an engine. The method 1000 is similar to the method 800. In the method 1000, when determining 1012 the acceleration, the denominator 914 is the difference between actual 932 and last pass 933 value of the average time. I.e., the acceleration comprises a ratio between the change in speed form the last pass revolution to the current revolution, and the difference between actual and last pass value of the average time.

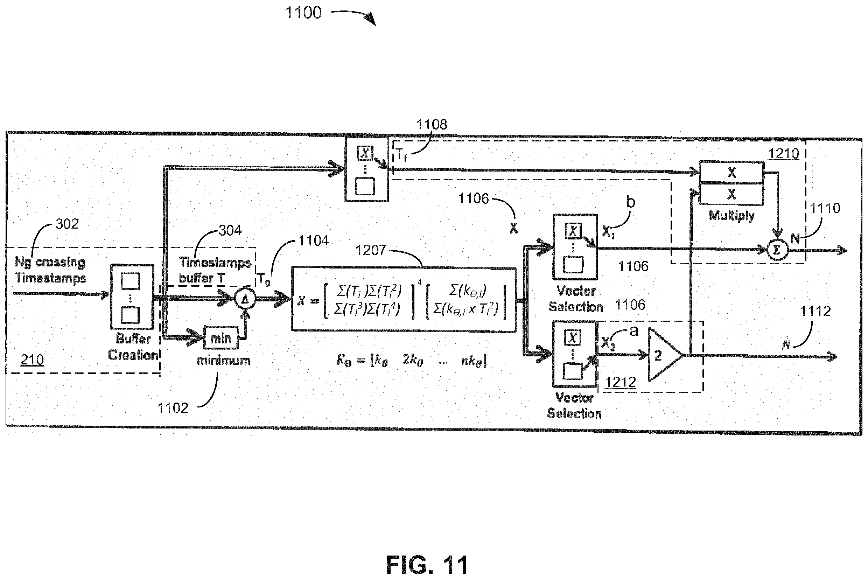

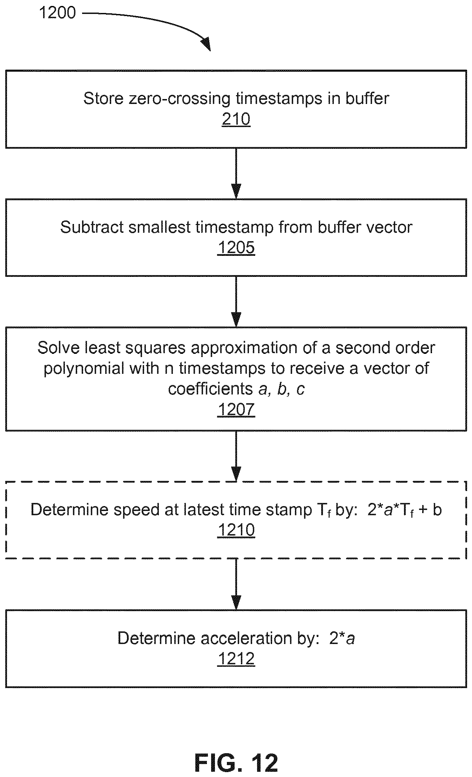

Figure 11 illustrates, in a schematic diagram, another example of a method 1100 of approximating an acceleration of a shaft, in accordance with some embodiments. Figure 12 illustrates, in a flowchart, the corresponding method of determining 1200 an acceleration of an engine. The method 1200 comprises fitting a second order polynomial, the polynomial defined by:

$$\Theta(t) = at^2 + bt + c,$$

where θ is the displacement with respect to time) to match the angular displacement of the n timestamps contained in buffer vector. In figure 11, one possible implementation is shown. In this implementation, the smallest timestamp 1102 is subtracted 1204 from the buffer vector 304 (contains n elements) to create a timestamps vector without bias 1104. That vector 1104, along with a vector that defines the angular displacements relative to oldest considered timestamp ($K_θ$), are used as inputs solve 1207 a system of linear equations. In this case, that system of equation is the least squares approximation 1207 of a second order polynomial with n timestamps. The output 1106 is a vector of the solution which is the coefficients of the fitted polynomial. From the fitted polynomial coefficients, the speed 1110 and acceleration 1112 can be found by performing an analytical differentiation. The acceleration 1112 is determined 1212 as comprising:

$$2*a,$$

and the speed 1110 may optionally be determined 1210 as comprising:

$$2*a*T_f + b.$$

For the speed 1110, time is evaluated (determined) 1210 at the latest timestamp ($T_f$ 1108).

Alternatively, it is possible to solve the least squares system of equations without making the simplifications mentioned above. Instead, a system of equations of three equations and three unknowns would be solved.

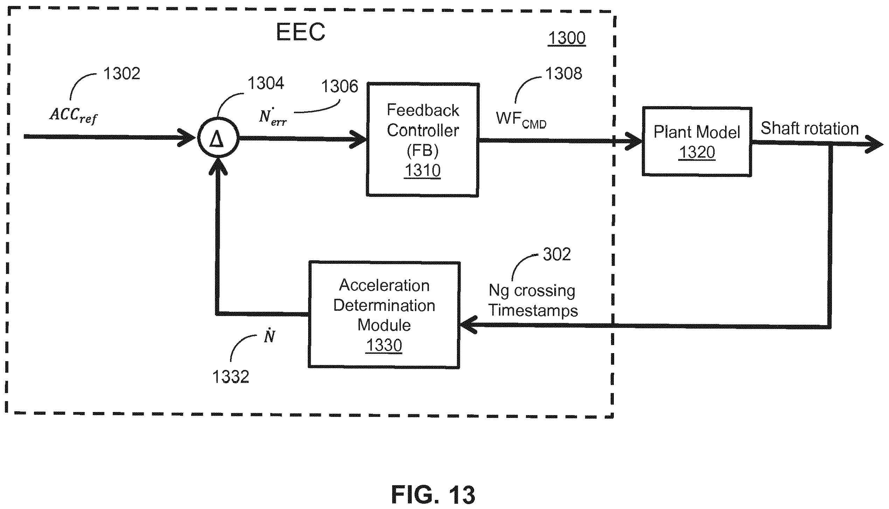

Figure 13 illustrates, in a schematic diagram, an example of a controller 1300 for an engine, in accordance with some embodiments. For example, an electric engine controller EEC 1302 may perform a method to control a gas turbine engine 10. EEC 1300 includes a feedback controller 1310. The feedback controller 1310 may be any kind of suitable feedback controller such as a proportional-integral-derivative (PID) controller. A feedback fuel flow $WF_{CMD}$ 1308 may be generated by the feedback controller 1310 and sent to an engine 10, represented by plant model 1320. The plant model 1320 causes the engine shaft to rotate which may be detected by phonic wheel assembly as described above. The timestamps 302 collected by the phonic wheel assembly, or other angular displacement measurement device, may be sent to the acceleration determination module 1330, which implements any of the methods of determining acceleration as described above.

In some embodiments, the feedback controller 1310 takes as input acceleration error Nerr 1306 that is determined as the difference between an acceleration reference ACCref 1302 and a filtered acceleration N 1332. The acceleration reference ACCref 1302 and the filtered acceleration N 1332 are sent to a subtraction junction 1304 to compute the acceleration error Nerr 1306. For example, the filtered acceleration N 1332 may be removed from the acceleration reference ACCref 1302 to result in the acceleration error value Nerr 1306. The filtered acceleration N 1332 may be determined by the acceleration determination module 1330 that implements any of the methods for determining an acceleration described above. Thus, as an example, a fuel flow to the engine is adjusted as a function of the acceleration as determined by the methods described herein.

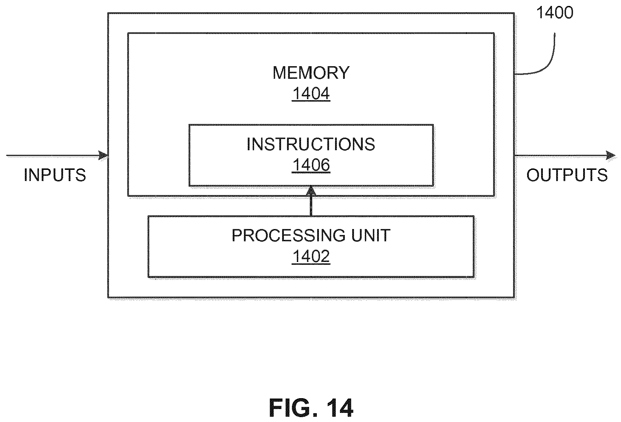

Figure 14 illustrates a schematic diagram of computing device 1400, exemplary of an embodiment. As depicted, computing device 1400 includes at least one processor 1402, and memory 1404.

With reference to figure 14, the methods described above may be implemented by a computing device 1400, comprising a processing unit 1402 and a memory 1404 which has stored therein computer-executable instructions 1406. The processing unit 1402 may comprise any suitable devices configured to implement the system and methods described above such that instructions 1406, when executed by the computing device 1400 or other programmable apparatus, may cause the functions/acts/steps of the methods as described herein to be executed. The processing unit 1402 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 1404 may comprise any suitable known or other machine-readable storage medium. The memory 1404 may comprise non-transitory computer readable storage medium, for example, but not limited to, an electronic, magnetic, optical, electromagnetic, infrared, or semiconductor system, apparatus, or device, or any suitable combination of the foregoing. The memory 1404 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 1404 may comprise any storage means (e.g., devices) suitable for retrievably storing machine-readable instructions 1406 executable by processing unit 1402.

The methods and systems for determining shaft acceleration described herein may be implemented in a high level procedural or object oriented programming or scripting language, or a combination thereof, to communicate with or assist in the operation of a computer system, for example the computing device 1400. Alternatively, the methods and systems for determining shaft acceleration may be implemented in assembly or machine language. The language may be a compiled or interpreted language. Program code for implementing the methods and systems for controlling operation of a first propeller of an aircraft may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for controlling operation of a first propeller of an aircraft may also be considered to be implemented by way of a non-transitory computer-readable storage medium having a computer program stored thereon. The computer program may comprise computer-readable instructions which cause a computer, or in some embodiments the processing unit 1402 of the computing device 1400, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure. Although each embodiment described herein represents a single combination of inventive elements, the subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

Various aspects of the methods and systems for determining shaft acceleration may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole. The methods and systems for determining shaft acceleration described herein may be implemented in a high level procedural or object oriented programming or scripting language, or a combination thereof, to communicate with or assist in the operation of a computer system, for example the computing device 1400. Alternatively, the methods and systems for shaft acceleration may be implemented in assembly or machine language. The language may be a compiled or interpreted language. Program code for implementing the methods and systems for detecting the shaft event may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for determining shaft acceleration may also be considered to be implemented by way of a non-transitory computer-readable storage medium having a computer program stored thereon. The computer program may comprise computer-readable instructions which cause a computer, or more specifically the processing unit 1402 of the computing device 1400, to operate in a specific and predefined manner to perform the functions described herein.

## Claims

1. A system for determining an acceleration of an engine (10), the system comprising:

    a processor (1402); and
    a non-transitory computer-readable medium (1404) having stored thereon program instructions (1406) executable by the processor (1402), the processor (1402) configured for:

        obtaining and storing zero-crossing timestamps (302) in a buffer (304), the zero-crossing timestamps (302) corresponding to an angular displacement of a shaft (20) associated with the engine (10) and obtained using an angular displacement measurement device;
        determining angular displacement times of the shaft (20) based on the timestamps (302);
        applying a conversion factor ($K_\theta$) to the angular displacement times, the conversion factor ($K_\theta$) corresponding to the angular displacement of the shaft (20);

determining an acceleration of the shaft (20) based on the angular displacement; and causing a fuel flow to the engine (10) to be adjusted as a function of the acceleration as determined.

2. The system as claimed in claim 1, wherein applying the conversion factor ($K_\theta$) comprises converting the angular displacement times into speed values, and determining the acceleration comprises determining a change in speed between a previous angular displacement and a current angular displacement (322; 720).

3. The system as claimed in claim 2, wherein:

determining angular displacement times of the shaft (20) comprises:

determining a time of a current angular displacement (308) of the shaft (20), the time of the current angular displacement (308) comprising a current timestamp (310) value less a first previous full angular displacement timestamp (312) value; and determining a time of a previous angular displacement (314) of the shaft (20), the time of the previous angular displacement (314) comprising the first previous full angular displacement timestamp value (312) less a second previous full angular displacement timestamp value (316); and

the change in speed between the previous angular displacement and the current angular displacement (322) comprises the speed of the previous angular displacement (320) less the speed of the current angular displacement (318).

4. The system as claimed in claim 2 or 3, wherein the acceleration comprises:

a ratio between the change in speed between the previous angular displacement and the current angular displacement (322) and an average angular displacement time of two previous angular displacements (324); or a ratio between the change in speed between the previous angular displacement and the current angular displacement (322); and the time of the current angular displacement (308).

5. The system as claimed in claim 2, wherein the program instructions (1406) are further executable for determining if at least one new zero-crossing has taken place, and an angular displacement time (306) of the shaft (20) comprises a current timestamp value (310) less a previous full angular displacement timestamp value (312).

6. The system as claimed in claim 5, wherein the change in speed between the previous angular displacement and the current angular displacement (720) comprises a speed of a current angular displacement last pass (319) less the speed of the current angular displacement (318).

7. The system as claimed in claim 6, wherein the acceleration comprises:

a ratio between the change in speed (720) and a difference between a latest timestamp value and a last pass timestamp value (714); or a ratio between the change in speed (720) and a difference (914) between an actual (932) and last pass (933) value of an average angular displacement time.

8. The system as claimed in claim 1, wherein the buffer (304) is a buffer vector (304) and the program instructions (1406) are further executable for subtracting a smallest timestamp (1102) from a buffer vector (304), and determining a least squares approximation (1207) of a second order polynomial with n timestamps to receive a vector of coefficients (1106), the second order polynomial defined by $\theta(t) = at^2 + bt + c$, wherein the acceleration (1112) of the shaft (20) at a latest timestamp (1108) is determined based on a coefficient of the vector of coefficients (1106), the acceleration (1112) of the shaft (20) at the latest timestamp (1108) comprising 2*a.

9. A computer-implemented method of determining an acceleration of an engine (10), the method comprising:

obtaining and storing, by a processor (1402), zero-crossing timestamps (302) in a buffer (304), the zero-crossing timestamps (302) corresponding to an angular displacement of a shaft (20) associated with the engine (10) and obtained using an angular displacement measurement device; determining, by the processor (1402), angular displacement times of the shaft (20) based on the timestamps (302); applying, by the processor (1402), a conversion factor ($K_\theta$) to the angular displacement times, the conversion factor ($K_\theta$) corresponding to an angular displacement of the shaft (20); determining, by the processor (1402), an acceleration of the shaft (20) based on the angular displacement; and causing a fuel flow to the engine (10) to be adjusted as a function of the acceleration as determined.

**10.** The method as claimed in claim 9, wherein applying the conversion factor (Kθ) comprises converting the angular displacement times into speed values, and determining the acceleration comprises determining a change in speed between a previous angular displacement and a current angular displacement (322; 720).

**11.** The method as claimed in claim 10, wherein: determining angular displacement times of the shaft (20) comprises:

determining, by the processor (1402), a time of a current angular displacement (308) of the shaft (20), the time of the current angular displacement (308) comprising a current timestamp (310) value less a first previous full angular displacement timestamp (312) value; and determining, by the processor (1402), a time of a previous angular displacement (314) of the shaft (20), the time of the previous angular displacement (314) comprising the first previous full angular displacement timestamp value (312) less a second previous full angular displacement timestamp value (316); and the change in speed between the previous angular displacement and the current angular displacement (322) comprises the speed of the previous angular displacement (320) less the speed of the current angular displacement (318).

**12.** The method as claimed in claim 10 or 11, wherein the acceleration comprises:

a ratio between the change in speed between the previous angular displacement and the current angular displacement (322) and an average angular displacement time of two previous angular displacements (324); or a ratio between the change in speed between the previous angular displacement and the current angular displacement (322) and a time of the current angular displacement (308).

**13.** The method as claimed in claim 10, further comprising determining, by the processor (1402), if at least one new zero-crossing has taken place, and wherein an angular displacement time (306) of the shaft (20) comprises a current timestamp value (310) less a previous full angular displacement timestamp value (312).

**14.** The method as claimed in claim 13, wherein the change in speed between the previous angular displacement and the current angular displacement (720) comprises a speed of a current angular displacement last pass (319) less the speed of the current angular displacement (318).

**15.** The method as claimed in claim 14, wherein the acceleration comprises:

a ratio between the change in speed (720) and a difference between a latest timestamp value and a last pass timestamp value (714); or a ratio between the change in speed (720) and a difference (914) between an actual (932) and last pass (933) value of an average angular displacement time.

*10*

*14*    *16*

*11*

*12*

*20*

*18*

## FIG. 1A

106

102

104

## FIG. 1B

200

Store zero-crossing timestamps in buffer
210

Determine revolution times
220

Apply angular displacement conversion factor to revolution times
230

Determine acceleration
240

## FIG. 2

FIG. 3

EP 3 626 947 A1

400

Store zero-crossing timestamps in buffer
210

Subtract from current timestamp the timestamp of a full previous revolution
404

Subtract from the previous timestamp the timestamp of a full previous revolution
406

220

Convert time results into speeds
408

230

Subtract speed of current revolution from speed of previous revolution
410

Determine acceleration using change in speed as numerator and average time of two last revolutions as denominator
412

240

**FIG. 4**

**FIG. 5**

EP 3 626 947 A1

600 ⟍

```
┌─────────────────────────────────────────────────┐
│        Store zero-crossing timestamps in buffer  │
│                      210                          │
└─────────────────────────────────────────────────┘
```

┌ ─ ─ ─ ─ ─ ─ ─ ─ ─ ─ ─ ─ ─ ─ ─ ─ ─ ─ ─ ─ ─ ─ 220 ┐
```
┌─────────────────────────────────────────────────┐
│  Subtract from current timestamp the timestamp   │
│         of a full previous revolution            │
│                      404                          │
└─────────────────────────────────────────────────┘

┌─────────────────────────────────────────────────┐
│  Subtract from the previous timestamp the        │
│       timestamp of a full previous revolution    │
│                      406                          │
└─────────────────────────────────────────────────┘
```
└ ─ ─ ─ ─ ─ ─ ─ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ─ ─ ─ ─ ─ ─ ─ ─ 230 ┐
```
┌─────────────────────────────────────────────────┐
│          Convert time results into speeds        │
│                      408                          │
└─────────────────────────────────────────────────┘
```
└ ─ ─ ─ ─ ─ ─ ─ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ─ ─ ─ ─ ─ ─ ─ ─ 240 ┐
```
┌─────────────────────────────────────────────────┐
│  Subtract speed of current revolution from       │
│          speed of previous revolution            │
│                      410                          │
└─────────────────────────────────────────────────┘

┌─────────────────────────────────────────────────┐
│  Determine acceleration using change in speed as │
│  numerator and the time of the current revolution│
│               as denominator                     │
│                      612                          │
└─────────────────────────────────────────────────┘
```
└ ─ ─ ─ ─ ─ ─ ─ ─ ─ ─ ─ ─ ─ ─ ─ ─ ─ ─ ─ ─ ─ ─ ─ ─ ┘

## FIG. 6

$700$

FIG. 7

800

Store zero-crossing timestamps in buffer
210

At least one new zero-crossing?
803

No → Use last determined acceleration
814

Yes

220

Subtract from current timestamp the timestamp of a full previous revolution
404

230

Convert time results into speeds
408

240

Subtract speed of current revolution from speed of current revolution last pass
810

Determine acceleration using change in speed as numerator and difference between latest timestamp and last pass timestamp as denominator
812

**FIG. 8**

FIG. 9

1000 —

Store zero-crossing timestamps in buffer
210

At least one new zero-crossing?
803

No →

Use last determined acceleration
814

Yes

220

Subtract from current timestamp the timestamp of a full previous revolution
404

230

Convert time results into speeds
408

240

Subtract speed of current revolution from speed of current revolution last pass
810

Determine acceleration using change in speed as numerator and difference between actual and last pass value of the average time as denominator
1012

FIG. 10

FIG. 11

1200

Store zero-crossing timestamps in buffer
210

Subtract smallest timestamp from buffer vector
1205

Solve least squares approximation of a second order
polynomial with n timestamps to receive a vector of
coefficients *a, b, c*
1207

Determine speed at latest time stamp $T_f$ by: $2*a*T_f + b$
1210

Determine acceleration by: $2*a$
1212

FIG. 12

FIG. 13

1400

MEMORY
1404

INSTRUCTIONS
1406

INPUTS

OUTPUTS

PROCESSING UNIT
1402

FIG. 14

Europäisches
Patentamt

European
Patent Office

Office européen
des brevets

# EUROPEAN SEARCH REPORT

**Application Number**

EP 19 19 9378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 192 980 A1 (PRATT & WHITNEY CANADA [CA]) 19 July 2017 (2017-07-19) <br> * paragraph [0030] * <br> * figure 7 * <br> * paragraph [0003] * <br> * paragraph [0029] * <br> ----- | 1-7,9-15 | INV. <br> F02C9/28 <br> F01D21/00 <br> G01D5/347 |
| X | EP 2 995 798 A1 (TOYOTA MOTOR CO LTD [JP]) 16 March 2016 (2016-03-16) <br> * figure 2 * <br> * paragraph [0021] * <br> ----- | 1 | |
| A | EP 2 899 384 A1 (DOOSAN HEAVY IND & CONSTR [KR]) 29 July 2015 (2015-07-29) <br> * figure 1 * <br> * paragraph [0029] - paragraph [0031] * <br> ----- | 1-15 | |

TECHNICAL FIELDS
SEARCHED        (IPC)

F02C
F01D
G01D

The present search report has been drawn up for all claims

| Place of search | Date of completion of the search | Examiner |
|---|---|---|
| The Hague | 12 February 2020 | Burattini, Paolo |

EPO FORM 1503 03.82 (P04C01)

**ANNEX TO THE EUROPEAN SEARCH REPORT
ON EUROPEAN PATENT APPLICATION NO.**

EP 19 19 9378

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2020

| Patent document cited in search report | | Publication date | Patent family member(s) | | Publication date |
|---|---|---|---|---|---|
| EP 3192980 | A1 | 19-07-2017 | CA | 2955525 A1 | 18-07-2017 |
| | | | EP | 3192980 A1 | 19-07-2017 |
| | | | US | 2017205312 A1 | 20-07-2017 |
| | | | US | 2019154543 A1 | 23-05-2019 |
| EP 2995798 | A1 | 16-03-2016 | CN | 105422267 A | 23-03-2016 |
| | | | EP | 2995798 A1 | 16-03-2016 |
| | | | US | 2016076438 A1 | 17-03-2016 |
| EP 2899384 | A1 | 29-07-2015 | CN | 104806359 A | 29-07-2015 |
| | | | EP | 2899384 A1 | 29-07-2015 |
| | | | JP | 5986174 B2 | 06-09-2016 |
| | | | JP | 2015137647 A | 30-07-2015 |
| | | | KR | 20150088947 A | 04-08-2015 |
| | | | US | 2015211419 A1 | 30-07-2015 |